# EUROPÄISCHE PATENTSCHRIFT

(11) **EP 4 129 597 B1**
(45) Veröffentlichungstag und Bekanntmachung des Hinweises auf die Patenterteilung: **22.11.2023**
(21) Anmeldenummer: 21189858.0
(22) Anmeldetag: 05.08.2021
(51) Int. Cl.: B27N 1/00, B27N 1/02, B27N 3/02, C08L 97/02, C09J 175/04, C08G 18/30, C08G 18/32, C08G 18/76, B27N 3/04

(54) **ZUCKERHALTIGES BINDEMITTELSYSTEM FÜR HOLZWERKSTOFFPLATTEN, EIN VERFAHREN ZUR HERSTELLUNG EINER HOLZWERKSTOFFPLATTE UNTER VERWENDUNG DIESES ZUCKERHALTIGEN BINDEMITTELSYSTEMS UND HOLZWERKSTOFFPLATTE HERGESTELLT NACH DIESEM VERFAHREN**
SUGAR-CONTAINING BINDER SYSTEM FOR WOOD MATERIAL BOARDS, A METHOD FOR PRODUCING A WOOD MATERIAL BOARD USING THIS SUGAR-CONTAINING BINDER SYSTEM AND WOOD MATERIAL BOARD OBTAINED BY THIS METHOD
SYSTÈME DE LIANT CONTENANT DU SUCRE POUR PANNEAUX EN MATÉRIAU DÉRIVÉ DU BOIS, PROCÉDÉ DE FABRICATION D'UN PANNEAU EN MATÉRIAU DÉRIVÉ DU BOIS À L'AIDE DUDIT SYSTÈME DE LIANT CONTENANT DU SUCRE ET PANNEAU EN MATÉRIAU DÉRIVÉ DU BOIS FABRIQUÉ SELON LEDIT PROCÉDÉ

(43) Veröffentlichungstag der Anmeldung: 08.02.2023
(73) Patentinhaber: SWISS KRONO Tec AG, 6004 Luzern (CH)
(72) Erfinder: Kalwa, Norbert, 32805 Horn-Bad Meinberg (DE); Seidack, Georg, 16835 Herzberg (Mark) (DE)
(74) Vertreter: Maikowski & Ninnemann Patentanwälte Partnerschaft mbB

(56) Entgegenhaltungen:
- CN-A- 109 609 080
- DE-A1-102011 002 809
- DE-C1- 19 756 154
- US-A1- 2003 134 945
- US-A1- 2017 361 580

## Beschreibung

Die vorliegende Erfindung betrifft ein zuckerhaltiges Bindemittelsystem für Holzwerkstoffplatten, ein Verfahren zur Herstellung einer Holzwerkstoffplatte unter Verwendung dieses zuckerhaltigen Bindemittelsystems und eine Holzwerkstoffplatte hergestellt nach diesem Verfahren.

### Beschreibung

Klebstoffe bzw. Bindemittel sind ein entscheidender Bestandteil bei der industriellen Fertigung von einer Vielzahl von Produkten, u.a. bei der Herstellung von Holzwerkstoffplatten. Hierbei werden Holzzerkleinerungsprodukte mit dem Bindemittel beleimt und unter Druck- und Temperaturanwendung zu Formkörpern wie z.B. Platten verpresst. Die Art und Menge des verwendeten Bindemittels wird dabei wesentlich von der Größe und Qualität der verwendeten Holzfasern und/oder Holzspäne beeinflusst.

Zur Herstellung von Holzwerkstoffen (HWS) wird seit Jahrzehnten im Wesentlichen ein Bindemittel auf Basis von Harnstoff und Formaldehyd eingesetzt. Dieses Bindemittel, Harnstoff-Formaldehyd-Leim, konnte sich am Markt durchsetzen, weil die beiden Leimkomponenten in großen Mengen am Markt verfügbar waren und preiswert sind. Zudem liefern damit hergestellte Holzwerkstoffe ein maßgeschneidertes Eigenschaftsprofil für die verschiedensten Anwendungen (Möbel, Innenausbau usw.)

Diese Bindemittel enthalten im Wesentlichen zwei Komponenten. Die eine Komponente ist Formaldehyd, die andere Komponente ist eine Chemikalie auf Erdölbasis (Phenol, Benzol, Toluol) oder Harnstoff.

In den letzten Jahren wurde allerdings durch toxikologische Studien festgestellt, dass Formaldehyd als krebserregend einzustufen ist. Davon sind natürlich auch Produkte wie Holzwerkstoffe betroffen, die durch die Verwendung des oben genannten Leims in der Nutzung in geringen Mengen Formaldehyd emittieren. Was für Harnstoff-Formaldehydleime gilt, trifft in ähnlicher Art und Weise auch für andere Leime zu, die als eine Komponente Formaldehyd enthalten.

Die heute im Wesentlichen eingesetzten Leime sind wegen ihrer toxikologischen Eigenschaften somit nicht unproblematisch. Dies ist auch bei den Rohstoffen zu berücksichtigen. So müssen bei der Herstellung bereits besondere Sicherheitsmaßnahmen getroffen werden. Dies gilt auch für den Transport und die Verarbeitung. Zudem beinhaltet die Leimherstellung auch einen Kondensationsschritt, der energetisch ungünstig ist.

Auch werden die Komponenten auf Erdölbasis, wie Phenol, Benzol oder Toluol kritisch betrachtet, da über kurz oder lang der Einsatz von Rohstoffen auf Basis nachwachsender Rohstoffe favorisiert werden sollte. Zudem verschlechtert der überwiegende Einsatz von Komponenten auf Basis von Erdölprodukten die CO₂-Bilanz der Leime.

Neben der Emissionsproblematik sind somit auch Aspekte bei der Herstellung, Verwendung und Entsorgung derartiger Leime kritisch. Dies alles hat zu einer verstärkten Suche nach Leimalternativen geführt, wobei zusätzlich auch der Aspekt der Nachhaltigkeit berücksichtigt wird.

Die Nachteile bei der Verwendung von klassischen Leimen bestehen somit in Verbrauch von Erdöl, einer schlechten CO₂-Bilanz und der Emission von toxischen Stoffen.

Beim Einsatz von Rohstoffen auf Basis nachwachsender Rohstoffe zur Herstellung von Leimen für HWS, stellen sich allerdings ähnliche Probleme, wie beim Einsatz in anderen Bereichen (z. B.: Treibstoffe, Kunststoffe usw.), nämlich den Entzug dieser Rohstoffe zur Nahrungsmittelherstellung.

Damit ist die Auswahl der zur Herstellung eingesetzten Rohstoffe kritisch. Es muss zum einen ein Rohstoff gefunden werden, der die benötigten Eigenschaften besitzt, und zum anderen sollte dieser Rohstoff durch Verwendung als Klebstoffkomponente nicht zu einer Verknappung und/oder einer Preiserhöhung in der Lebensmittelherstellung führen.

Ansätze zur Entwicklung von Leimen auf Basis von nachwachsenden Rohstoffen sind bereits bekannt. In der US 6,822,042 B2 wird z. B. ein Leim beschrieben, der aus den Komponenten Zucker (insbesondere auf der Basis von Maissirup), Isocyanat und Polyol (bevorzugt Propylenglycol) besteht. Wie die Auflistung der Komponenten zeigt sind zwar aber immer noch zwei von drei Chemikalien auf Erdölbasis, jedoch ist die Hauptkomponente auf Basis eines nachwachsenden Rohstoffs.

CN 109609080A beschreibt ein Isocyanat-haltiges Bindemittel für Spanplatten umfassend Isocyanat, Polyole, einen Initiator, Acrylsäure, Stärke, Polyvinyl Alkohol, Sojaprotein.

US 2017/0361580A1 beschreibt ein Verfahren zur Herstellung von mehrschichtigen lignozellulosehaltige Materialien. Als mögliche Kleber werden Aminoplastharze (wie zum Beispiel Harnstoff-Formaldehydharz) und organische Isocyanate benannt. Das organische Isocyanat kann durch Reaktion von einem Isocyanat mit einem oder mehreren Polyolen erhalten werden, wobei eine Vielzahl von möglichen Polyolen unter anderem Propylenglycol, Glycerol, Sorbitol, benannt wird. In den Ausführungsbeispielen wird ausschließlich Kaurit als Bindemittel verwendet, welches ein Harnstoff-Formaldehyd-Harz ist. Das Bindemittel wird gemäß der Ausführungsbeispiele mit Natriumnitrat, Ammoniumnitrat und einem Wachs vermischt

Der vorliegenden Erfindung liegt die Aufgabe zugrunde, einen Leim für Holzwerkstoffplatten zu entwickeln, der im Wesentlichen aus nachwachsenden Rohstoffen besteht, die in ausreichenden Mengen zur Verfügung stehen. Weiterhin soll bei dem Einsatz dieser Rohstoffe keine Verknappung in anderen Bereichen entstehen. Die Rohstoffe sollen bezüglich ihrer Zusammensetzung keinerlei gesundheitliche Risiken bei deren Verwendung und Entsorgung besitzen. Zudem sollen sich die Produktpreise durch den Einsatz dieser Rohstoffe nicht signifikant erhöhen. Wenn möglich, sollte sich auch der neue Leim bzw. die Platte, die mit dem Leim hergestellt wird, bezüglich seinen Emissionen günstiger verhalten als die meisten Leime auf Erdölbasis. Dies soll insbesondere für die Formaldehydemission gelten. Auch sollte aus dem Einsatz der neuen Leime keine Verschlechterung des Recyclings resultieren.

Diese Aufgabe wird erfindungsgemäß durch ein Bindemittelsystem mit den Merkmalen des Anspruchs 1, ein Verfahren mit den Merkmalen des Anspruchs 8, und eine Holzwerkstoffplatte mit den Merkmalen des Anspruchs 13 gelöst.

Demnach wird ein Bindemittelsystem verwendet, welches aus zwei Komponenten besteht: eine erste Komponente bestehend aus mindestens einem Zucker, mindestens einem Zuckeralkohol oder einer Mischung davon; eine zweite Komponente bestehend aus mindestens einem Isocyanat; und Wasser.

Das vorliegende Bindemittelsystem wird in einem Verfahren zur Herstellung einer Holzwerkstoffplatte bereitgestellt, welches die folgenden Schritte umfasst:
a) Bereitstellen von Holzpartikeln, insbesondere von Holzspänen,
b) Beleimen der Holzpartikel durch Aufbringen eines wässrigen Bindemittelsystems mit einer ersten Komponente bestehend aus mindestens einem Zucker, mindestens einem Zuckeralkohol oder einer Mischung davon, und einer zweiten Komponente bestehend aus mindestens einem Isocyanat auf die Holzpartikel;
c) Aufbringen der beleimten Holzpartikel auf ein Transportband; und
d) Verpressen der auf dem Transportband angeordneten beleimten Holzpartikel.

Für das Bindemittelsystem werden vorliegend Rohstoffe verwendet, die im Wesentlichen auf Zucker und/oder Zuckeralkoholen basieren. Der Anteil dieser Komponente sollte mindestens bei 85 Gew% liegen. Ein erheblicher Vorteil ist, dass der Leim durch die Mischung der Komponenten hergestellt wird. Dies bringt erhebliche Vorteile bezüglich der Haltbarkeit der Leime. Es ist bekannt, dass die heute verwendeten Leime (Harnstoff-Formaldehyd-Leim, Phenol- Formaldehyd-Leim usw.) bezüglich ihrer Haltbarkeit gewissen Einschränkungen unterworfen sind. Sie sollten innerhalb von zwei Wochen verarbeitet werden, weil danach durch Weiterkondensation eine Veränderung der Viskosität (Erhöhung) und der Wasserverdünnbarkeit (Erniedrigung) erfolgt. Dies erschwert nicht nur die Verarbeitung sondern führt auch zu einer generellen Verschlechterung der Leimqualität. Dies ist durch die Ausbildung von Oligomeren/Polymeren bedingt, die sich schlechter in der Holzmatrix verteilen. Zudem ist die Verdüsung von höherviskosem Leim bei weitem nicht so effektiv, wie die Verdüsung von niederviskosem Leim.

Ein weiterer Vorteil ist, dass die Dosierung dieses neuen Leims - je nach Prozessbedingungen und Produkt - nacheinander oder gleichzeitig dosiert werden kann. Auch kann das Verhältnis der beiden Komponenten zwischen Deck- und Mittelschicht des Produktes variiert werden. Dies kann je nach Verwendungszweck des Produktes kostengünstiger sein, als z. B. die generelle Erhöhung der Beleimung.

Zudem bringt dies auch Vorteile hinsichtlich der Ökobilanz, da ein energieintensiver Herstellschritt vermieden wird. Ebenfalls nicht zu unterschätzen ist, dass man Leimmodifizierungen einfach durch prozentuale Veränderung der Komponenten vornehmen kann. Da es sich bei der Hauptkomponente um eine wasserlösliche Verbindung handelt und selbst von einer HWS-Platte für Möbelanwendungen eine gewisse Beständigkeit gegenüber Feuchte oder Wasser erwartet wird, wird der Rezeptur eine geringe Menge an PMDI zugegeben.

Das vorliegende wässrige Bindemittelsystem weist außer dem Zucker, Zuckeralkohol und dem Isocycanat keine weiteren Komponenten auf. So ist es frei von Formaldehyd, synthetischen Polyolen und/oder Kunststoffen und Verdickungsmitteln, insbesondere Polyvinylalkohol oder Polyvinylacetat, oder auch Acrylaten.

Insbesondere der Verzicht auf Polyvinylalkohol bei Verleimung von Holzspänen bei der Herstellung von Holzspanplatten war überraschend, da bei Verleimung von Holzfasern bei der Herstellung von Holzfaserplatten die Verwendung von Polyvinylalkohol sich als wesentlich für eine stabile Verklebung herausgestellt hatte.

In einer Ausführungsform weist das vorliegende Bindemittelsystem die erste Komponente aus mindestens einem Zucker, mindestens einem Zuckeralkohol, oder einer Mischung davon in einer Menge zwischen 70 und 95 Gew%, bevorzugt zwischen 75 und 90 Gew%, insbesondere zwischen 80 und 85 Gew% in Bezug auf die Gesamtmenge an erster und zweiter Komponente auf.

Aus den oben geschilderten Gründen zur Bedeutung und Vorteil der Verwendung von nachwachsenden Rohstoffen werden Polyole auf Basis von Zuckern bevorzugt. Diese lassen sich leicht durch Hydrierung bzw. durch enzymatische Umwandlung der entsprechenden Vorprodukte erzeugen.

In einer Ausführungsform des vorliegenden Bindemittelsystems werden reduzierende Mono- und/oder Disaccharide verwendet. Unter reduzierenden Mono- oder Disacchariden sind im Sinne der vorliegenden Anmeldung solche Saccharide zu verstehen, die über mindestens eine Aldehydgruppe im linearen Zustand verfügen. Nicht reduzierende Saccharide hingegen verfügen über keine freien Aldehydgruppen. Ein Beispiel für ein nicht reduzierendes Disaccharid ist Saccharose, in welchem die beiden Monosaccharide Glukose und Fruktose unter neutralen und basischen Bedingungen über eine α,β-1,2- Glykosidische Bindung in Acetalform miteinander verbunden vorliegen. Allerdings ist unter sauren Bedingungen eine Spaltung der Saccharose in die reduzierenden Monosaccharide Glukose und Fructose möglich.

In einer bevorzugten Ausführungsform werden als Monosaccharide Pentosen und Hexosen verwendet. Pentosen und Hexosen sind dabei insbesondere ausgewählt aus der Gruppe enthaltend Arabinose, Ribose, Xylose, Glukose (Dextrose), Mannose, Galaktose und Fruktose. Die genannten Saccharide können sowohl in ihrer D- als auch in ihrer L-Form verwendet werden.

In einer weiteren Ausführungsform werden als Zuckeralkohole ausgewählt aus einer Gruppe enthaltend vierwertige, fünfwertige, sechswertige Alkohole (auch bekannt als reduzierte Zucker bzw. Alditole) verwendet. Dabei können als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden. Als besonders vorteilhaft hat sich die Verwendung von Sorbit (bzw. Sorbitol) erwiesen.

Als Polyole oder polyalkoholische Verbindungen werden demnach ausschließlich mehrwertige Alkohole auf Zuckerbasis verwendet. Auf die Verwendung von synthetischen Polyolen wie Glykole, wie Ethylenglykol, Propylenglykol, Diethylenglykol, Triethylenglykol, Polyethylenglykol, Polypropylenglykol, Polybutylenglykol wird demnach verzichtet. Insbesondere wird vorliegend kein 1,2-Propylenglykol als Leimkomponente verwendet.

In einer weitergehenden Ausführungsform wird der mindestens eine Zucker und/oder der mindestens eine Zuckeralkohol als wässrige Lösung mit einem Feststoffanteil zwischen 60 und 80 Gew%, bevorzugt zwischen 65 und 75 Gew%, insbesondere bevorzugt 70 Gew% auf die Holzpartikel aufgetragen.

So wird der mindestens eine Zucker und/oder der mindestens eine Zuckeralkohol in einer Menge zwischen 80 und 200 g fl, bevorzugt in einer Menge zwischen 100 und 150 g fl, insbesondere bevorzugt in einer Menge zwischen 120 und 140 g fl. bezogen auf 1 kg Holzpartikel aufgetragen.

Im Falle einer Mischung von Zucker und Zuckeralkohol kann die Menge an Zucker und Zuckeralkohol im Verhältnis zueinander variieren, wobei die Gesamtmenge in dem für Zucker und Zuckeralkohol angegebenen Bereich liegen sollte. Das Mengenverhältnis von Zucker zu Zuckeralkohol kann zwischen 3 :1 und 1 : 3, zwischen 2 :1 und 1 : 2, insbesondere bei 1 : 1 liegen.

In einer Ausführungsform basiert das mindestens eine Isocyanat auf aromatischen Polyisocyanaten, insbesondere Polydiphenylmethandiisocyanat (PMDI), Toluylendiisocyanat (TDI) und/oder Diphenylmethandiisocyanat (MDI), wobei PMDI besonders bevorzugt ist.

In einer Ausführungsform weist das vorliegende Bindemittelsystem die zweite Komponente aus mindestens einem Isocyanat in einer Menge zwischen 5 und 30 Gew%, bevorzugt zwischen 10 und 25 Gew%, insbesondere bevorzugt zwischen 15 und 20 Gew% in Bezug auf die Gesamtmenge an erster und zweiter Komponente auf.

Das mindestens eine Isocyanat wird in einer Variante in einer Menge zwischen 5 und 30 g, bevorzugt zwischen 10 und 25 g, insbesondere bevorzugt zwischen 15 und 20 g in Form einer 100 Gew%igen Lösung bezogen auf 1 kg Holzpartikel aufgetragen.

In einer Ausführungsform umfasst das vorliegende Bindemittelsystem einen Zucker / Zuckeralkohol in einer Menge zwischen 170 und 190 g fl einer 70 Gew% Lösung und ein Isocyanat in einer Menge zwischen 15 und 20 g einer 100 Gew% Lösung bezogen auf 1 kg Holzpartikel.

In einer weiteren Ausführungsform umfasst das vorliegende Bindemittelsystem einen Zucker / Zuckeralkohol in einer Menge zwischen 180 und 200 g fl einer 70 Gew% Lösung und ein Isocyanat in einer Menge zwischen 10 und 15 g einer 100 Gew% Lösung bezogen auf 1 kg Holzpartikel.

Die Bindemittelkomponenten können als wässrige Mischung oder auch nacheinander auf die Holzpartikel aufgesprüht werden. Dies kann z.B. in einem Mischer, einem Coil oder einer Blowline erfolgen.

Nach dem Auftragen der Bindemittelkomponenten auf die Holzpartikel werden die beleimten Holzpartikel auf einem Transportband abgelegt oder aufgestreut und anschließend zu einer Holzwerkstoffplatte verpresst.

Das Verpressen kann bei einer Presstemperatur zwischen 150 und 250°C, bevorzugt 180°C und 220°C, und einer Presszeit zwischen 30 und 240 sec, bevorzugt 100 und 210 sec, insbesondere 150 und 180 sec erfolgen.

Die mit dem vorliegenden Verfahren hergestellten Holzwerkstoffplatten weisen somit eine Bindemittelzusammensetzung auf, bestehend aus
- einer ersten Komponente aus mindestens einem Zucker, mindestens einem Zuckeralkohol, oder einer Mischung davon;
- einer zweiten Komponente aus mindestens einem Isocyanat.

Die in dem vorliegenden Verfahren verwendeten Holzpartikel sind bevorzugt Holzspänen oder Holzstrands.

Mit dem vorliegenden Verfahren können demnach bevorzugt Holzwerkstoffplatten in Form einer Holzspanplatte oder einer OSB (oriented strand board) bereitgestellt werden.

Holzspanplatten bilden die Basis vieler Gegenstände des täglichen Lebens, beispielsweise von Möbeln oder Belägen für Wand, Boden oder Decke.

Für die Herstellung von Holzspanplatten werden zunächst Hackschnitzel aus geeigneten Hölzern hergestellt. Es ist auch möglich, Holzspäne aus Holz ohne den Umweg über Hackschnitzel herzustellen. Die Hackschnitzel bzw. das Holz können vor ihrer weiteren Verwendung von Fremdstoffen z.B. im Rahmen einer Trockenreinigung oder Nassreinigung gereinigt werden.

Es schließt sich ein Zerspanungsprozess der Holzhackschnitzel in einem Zerspaner oder ein Zerfaserungsprozess der Holzhackschnitzel in einem Refiner an, wobei Holzspänen während des Zerfaserungsprozesses ebenfalls zusätzlich ein Benetzungsmittel zur Verbesserung der Wasserbenetzung des wärmebehandelten Holzes bzw. der Holzhackschnitzel zugegeben werden kann.

Die mit dem Zerspanungsprozess hergestellten Holzspäne weisen typischerweise eine Länge zwischen 1,5 mm und 20 mm und eine Dicke zwischen 0,05 mm und 1 mm auf.

In einem weiteren Schritt werden die Holzspäne nach dem Zerspanungsprozess mit dem vorliegenden Bindemittelsystem wie oben beschrieben beaufschlagt bzw. in Kontakt gebracht, wobei das In-Kontaktbringen der Holzspäne mit dem Bindemittel jeweils in unterschiedlicher Weise erfolgen kann.

Holzspäne werden bevorzugt in einer Mischvorrichtung, z.B. Trogmischer oder Trommelmischer (Coil), mit dem Bindemittel kontaktiert.

Nach Beleimen werden die Holzspäne auf ein Transportband mittels Wind- und/oder Wurfstreuungaufgebracht. Es folgt das Verpressen der auf dem Transportband angeordneten Holzspäne , unter den oben angeführten Pressbedingungen.

Grobspanplatten, auch OSB (oriented strand boards) genannt, sind Holzwerkstoffplatten, die aus langen Spänen (strands) hergestellt werden. Die ursprünglich als Abfallprodukte der Furnier- und Sperrholzindustrie anfallenden OSB werden jedoch zunehmend im Holz- und Fertighausbau eingesetzt, da OSB leicht sind und trotzdem die an Bauplatten gesetzten statischen Anforderungen erfüllen. So werden OSB als Bauplatten und als Wand- oder Dachbeplankung oder auch im Fußbodenbereich eingesetzt.

Die Herstellung der OSB erfolgt in einem mehrstufigen Prozess, wobei zunächst die Späne oder Strands aus entrindetem Rundholz, bevorzugt Nadelhölzer, in Längsrichtung durch rotierende Messer abgeschält werden. Im sich anschließenden Trocknungsvorgang wird die natürliche Feuchtigkeit der Strands bei hohen Temperaturen reduziert.

Die so hergestellten Holzstrands können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm aufweisen.

In einer Ausführungsform weisen die Holzstrands z.B. eine Länge zwischen 150 und 200 mm, eine Breite zwischen 15 und 20 mm, eine Dicke zwischen 0,5 und 1 mm und eine Feuchte von max. 50% auf.

Im Anschluss an die Trocknung der Strands werden diese in eine Beleimvorrichtung (Coil) eingeführt, in welcher das vorliegende Bindemittelsystem auf die Späne aufgebracht wird.

Nach der Beleimung werden die beleimten Strands in Streuapparaturen alternierend längs und quer zur Produktionsrichtung gestreut, so dass die Strands kreuzweise in mindestens drei Schichten angeordnet sind (untere Deckschicht - Mittelschicht - obere Deckschicht). Die Streurichtung von unterer und oberer Deckschicht ist dabei gleich, weichen jedoch von der Streurichtung der Mittelschicht ab. Auch unterscheiden sich die in der Deckschicht und Mittelschicht verwendeten Strands voneinander. So sind die in den Deckschichten verwendeten Strands flächig und die in der Mittelschicht verwendeten Strands weniger flächig bis hin zu spanförmig. Üblicherweise werden bei der Herstellung der OSB-Platten zwei Materialstränge gefahren: einer mit flächigen Strands für die späteren Deckschichten und einer mit "Spänen" für die Mittelschicht. Entsprechend können die Strands in der Mittelschicht qualitativ schlechter sein, da die Biegefestigkeit im Wesentlichen durch die Deckschichten erzeugt wird. Deshalb kann auch Feingut, das beim Zerspanen entsteht, in der Mittelschicht von OSB verwendet werden.

Im Anschluss an die Streuung der Strands erfolgt ein kontinuierliches Verpressen der selbigen unter hohem Druck und hoher Temperatur von z.B. 200 bis 250°C.

Die unter Verwendung des vorliegenden Bindemittelsystems hergestellten Holzwerkstoffplatten, insbesondere Holzspanplatten, weisen eine Querzugsfestigkeit von größer 0,25 N/mm², bevorzugt von größer 0,3 N/mm², insbesondere bevorzugt größer 0,4 N/mm², noch bevorzugter größer 0,5 N/mm² auf. Die Querzugsfestigkeit kann in einem Bereich zwischen 0,25 und 0,7 N/mm², bevorzugt zwischen 0,3 und 0,6 N/mm², insbesondere bevorzugt zwischen 0,4 und 0,5 N/mm² liegen.

In einer Ausführungsform weist eine Holzspanplatte mit einem Bindemittelsystem aus einem Zucker / Zuckeralkohol in einer Menge zwischen 170 und 190 g fl einer 70 Gew% Lösung und einem Isocyanat in einer Menge zwischen 15 und 20 g einer 100 Gew% Lösung bezogen auf 1 kg Holzspäne eine Querzugsfestigkeit in einem Bereich zwischen 0,45 und 0,65 N/mm², bevorzugt zwischen 0,5 und 0,6 N/mm², insbesondere bevorzugt zwischen 0,55 und 0,58 N/mm² auf.

In einer weiteren Ausführungsform weist eine Holzspanplatte mit einem Bindemittelsystem aus einem Zucker / Zuckeralkohol in einer Menge zwischen 180 und 200 g fl einer 70 Gew% Lösung und einem Isocyanat in einer Menge zwischen 10 und 15 g einer 100 Gew% Lösung bezogen auf 1 kg Holzspäne eine Querzugsfestigkeit in einem Bereich zwischen 0,25 und 0,0,45 N/mm², bevorzugt zwischen 0,3 und 0,4 N/mm², insbesondere bevorzugt zwischen 0,33 und 0,29 N/mm² auf.

Die Vorteile des vorliegenden Bindemittelsystems und der damit hergestellten Holzwerkstoffplatten lassen sich wie folgt zusammenfassen:
- Keine Konkurrenz zu Nahrungsmittelherstellung;
- Gesundheitlich unbedenkliche Rohstoffe;
- Verbesserte CO₂-Bilanz;
- Lange Haltbarkeit;
- Sehr variable Rezeptur.

Die Erfindung wird nachfolgend an mehreren Ausführungsbeispielen näher erläutert.

### Ausführungsbeispiel 1:

- 1000 g Mittelschichtspäne ( Feuchte: ca. 5% )
- 185,5 g Sorbitol fl. ( 70 Gew%ige Lösung )
- 20,0 g PMDI ( 100 Gew%ige Lösung )

Die beiden Leimkomponenten werden nacheinander in einem Mischer auf die Späne aufgesprüht. Dann wurden aus den beleimten Spänen in einer Presse 15 mm Spanplatten mit unterschiedlichen Rohdichten unter Verwendung von identischen Pressparametern hergestellt.

Die Press- und Plattenparameter waren wie folgt:

**Tabelle 1:**

| | Temperatur in °C | Presszeit in sec. | | Pressdruck in N/mm² | | Stärke in mm | Rohdichte in kg/m³ Soll / Ist | Querzug in N/mm² | Quellung (24h) in % |
|---|---|---|---|---|---|---|---|---|---|
| 1 | 180 | 1. | 30 | 1. | 1,8 | 16,92 | 700 / 645 | 0,48 | 34,4 |
| | | 2. | 240 | 2. | 1,5 | | | | |
| 2 | 180 | 1. | 30 | 3. | 1,8 | 17,05 | 800 / 669 | 0,58 | 24,1 |
| | | 2. | 240 | 4. | 1,5 | | | | |
| 3 | 180 | 1. | 30 | 3. | 1,8 | 14,55 | 630 / 658 | 0,56 | 26,7 |
| | | 2. | 240 | 4. | 1,5 | | | | |

Wie aus den Ergebnissen der Tabelle 1 zu entnehmen ist werden bezüglich der Querzugfestigkeiten die Werte für P2 gemäß der DIN EN 312 erreicht. Der P2 Wert liegt für den Dickenbereich (Stärkenbereich) von 13 bis 20 mm bei 0,35 N/m².

### Ausführungsbeispiel 2:

- 1000 g Mittelschichtspäne ( Feuchte: ca. 5% )
- 200,0 g Sorbitol fl. ( 70 Gew%ige Lösung )
- 10,0 g PMDI ( 100 Gew%ige Lösung )

Die beiden Leimkomponenten werden nacheinander in einem Mischer auf die Späne aufgesprüht. Dann wurden aus den beleimten Spänen in einer Presse 15 mm Spanplatten mit unterschiedlichen Rohdichten unter Verwendung von identischen Pressparametern hergestellt.

Die Press- und Plattenparameter waren wie folgt:

**Tabelle 2:**

| | Temperatur in °C | Presszeit in sec. | | | Pressdruck in N/mm² | | | Stärke in mm | Rohdichte in kg/m³ Soll /Ist | Querzug in N/mm² | Quellung (24 h) in % |
|---|---|---|---|---|---|---|---|---|---|---|---|
| 1 | 180 | | 3. | 30 | | 3. | 1,8 | 17,18 | 700 /612 | 0,28 | 69,8 |
| | | | 4. | 240 | | 4. | 1,5 | | | | |
| 2 | 180 | | 5. | 30 | | 7. | 1,8 | 19,0 | 800 / 620 | 0,31 | 51,4 |
| | | | 6. | 240 | | 8. | 1,5 | | | | |
| 3 | 180 | | 5. | 30 | | 7. | 1,8 | 15,35 | 630 / 625 | 0,39 | 38,2 |
| | | | 6. | 240 | | 8. | 1,5 | | | | |

Wie aus den Ergebnissen der Tabelle 2 zu entnehmen ist werden bezüglich der Querzugfestigkeiten die Werte für P1 (Probe 1 + 2) und P2 ( Probe 3 ) gemäß der DIN EN 312 erreicht. Der Wert liegt für P1 für den Dickenbereich (Stärkenbereich) von 13 bis 20 mm bei 0,24 N/mm².

Wie aus der Tabelle weiter zu entnehmen ist, werden die angestrebten Parameter nur teilweise erreicht, was auf eine etwas inhomogene Verteilung der Komponente PMDI zurückzuführen sein könnte.

Bei der Formulierung der Rezepte ist besonders positiv, dass die Hauptkomponente (Zucker- /Zuckeralkohollösungen) relativ konzentriert eingesetzt werden können (Feststoffgehalt bis ca. 85Gew% ). Dadurch ist eine gute Steuerung des Wassergehaltes der Späne möglich.

## Patentansprüche

1. Bindemittelsystem für Holzwerkstoffplatten bestehend aus
- einer ersten Komponente bestehend aus mindestens einem Zucker, mindestens einem Zuckeralkohol, oder einer Mischung davon;
- einer zweiten Komponente bestehend aus mindestens einem Isocyanat, und
- Wasser.

2. Bindemittelsystem nach Anspruch 1, **dadurch gekennzeichnet, dass** es frei ist von Formaldehyd, synthetischen Polyolen und/oder Kunststoffen und Verdickungsmitteln, insbesondere Polyvinylalkohol oder Polyvinylacetat.

3. Bindemittelsystem nach einem der vorhergehenden Ansprüche, **dadurch gekennzeichnet, dass** die erste Komponente aus mindestens einem Zucker, mindestens einem Zuckeralkohol, oder einer Mischung davon in einer Menge zwischen 70 und 95 Gew%, bevorzugt zwischen 75 und 90 Gew%, insbesondere zwischen 80 und 85 Gew% in Bezug auf die Gesamtmenge an erster und zweiter Komponente vorliegt.

4. Bindemittelsystem nach einem der vorhergehenden Ansprüche, **dadurch gekennzeichnet, dass** der mindestens eine Zucker ein Monosaccharide aus der Gruppe der Pentosen und Hexosen, insbesondere ausgewählt aus der Gruppe enthaltend Arabinose, Ribose, Xylose, Glucose (Dextrose), Mannose, Galactose und Fructose ist.

5. Bindemittelsystem nach einem der Ansprüche 1-3, **dadurch gekennzeichnet, dass** der mindestens eine Zuckeralkohol ausgewählt ist aus einer Gruppe enthaltend vierwertige, fünfwertige, sechswertige Alkohole, wobei als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden.

6. Bindemittelsystem nach einem der vorhergehenden Ansprüche, **dadurch gekennzeichnet, dass** das mindestens eine Isocyanat Polydiphenylmethandiisocyanat (PMDI), Toluylendiisocyanat (TDI) und/oder Diphenylmethandiisocyanat (MDI) ist.

7. Bindemittelsystem nach einem der vorhergehenden Ansprüche, **dadurch gekennzeichnet, dass** die zweite Komponente aus mindestens einem Isocyanat in einer Menge zwischen 5 und 30 Gew%, bevorzugt zwischen 10 und 25 Gew%, insbesondere bevorzugt zwischen 15 und 20 Gew% in Bezug auf die Gesamtmenge an erster und zweiter Komponente vorliegt.

8. Verfahren zur Herstellung einer Holzwerkstoffplatte unter Verwendung eines Bindemittelsystems nach einem der vorhergehenden Ansprüche umfassend die Schritte:
a) Bereitstellen von Holzpartikeln,
b) Beleimen der Holzpartikel durch Aufbringen eines wässrigen Bindemittelsystems mit einer ersten Komponente bestehend aus mindestens einem Zucker, mindestens einem Zuckeralkohol, oder einer Mischung davon, und einer zweiten Komponente bestehend aus mindestens einem Isocyanat auf die Holzpartikel;
c) Aufbringen der beleimten Holzpartikel auf ein Transportband; und
d) Verpressen der auf dem Transportband angeordneten beleimten Holzpartikel.

9. Verfahren nach Anspruch 8, **dadurch gekennzeichnet, dass** der mindestens eine Zucker und/oder der mindestens eine Zuckeralkohol als wässrige Lösung mit einem Feststoffanteil zwischen 60 und 80 Gew%, bevorzugt zwischen 65 und 75 Gew%, insbesondere bevorzugt 70 Gew% auf die Holzpartikel aufgetragen wird.

10. Verfahren nach einem der Ansprüche 8-9, **dadurch gekennzeichnet, dass** das mindestens eine Isocycanat in einer Menge zwischen 5 und 30 g, bevorzugt zwischen 10 und 25 g, insbesondere bevorzugt zwischen 15 und 20 g in Form einer 100 Gew%igen Lösung bezogen auf 1 kg Holzpartikel aufgetragen.

11. Verfahren nach einem der Ansprüche 8-10, **dadurch gekennzeichnet, dass** das Verpressen bei einer Presstemperatur zwischen 150 und 200°C, bevorzugt 180°C und einer Presszeit zwischen 30 und 240 sec, bevorzugt 100 und 210 sec, insbesondere 150 und 180 sec erfolgt.

12. Verfahren nach einem der Ansprüche 8-11, **dadurch gekennzeichnet, dass** die Holzpartikel in Form von, Holzspänen oder Holzstrands verwendet werden.

13. Holzwerkstoffplatte herstellbar nach einem Verfahren gemäß einem der Ansprüche 8-12 **gekennzeichnet durch** eine Bindemittelzusammensetzung bestehend aus
- einer ersten Komponente aus mindestens einem Zucker, mindestens einem Zuckeralkohol, oder einer Mischung; und
- einer zweiten Komponente aus mindestens einem Isocyanat.

14. Holzwerkstoffplatte nach Anspruch 13, **dadurch gekennzeichnet, dass** die Holzwerkstoffplatte eine Holzspanplatte oder eine OSB (oriented strand board) ist.

15. Holzwerkstoffplatte nach einem der Ansprüche 13-14 **gekennzeichnet durch** eine Querzugsfestigkeit von größer 0,25 N/mm², insbesondere von größer 0,3 N/mm², bevorzugt größer 0,4 N/mm², noch bevorzugter größer 0,5 N/mm².

## Claims

1. Binder system for wood-based panels consisting of
- a first component consisting of at least one sugar, at least one sugar alcohol, or a mixture thereof;
- a second component consisting of at least one isocyanate, and
- Water.

2. Binder system according to claim 1, **characterised in that** it is free from formaldehyde, synthetic polyols and/or plastics and thickeners, in particular polyvinyl alcohol or polyvinyl acetate.

3. Binder system according to one of the preceding claims, **characterized in that** the first component consists of at least one sugar, at least one sugar alcohol, or a mixture thereof in an amount between 70 and 95% by weight, preferably between 75 and 90% by weight, in particular between 80 and 85% by weight with respect to the total amount of first and second component.

4. Binder system according to one of the preceding claims, **characterised in that** the at least one sugar is a monosaccharide from the group of pentoses and hexoses, in particular selected from the group comprising arabinose, ribose, xylose, glucose (dextrose), mannose, galactose and fructose.

5. Binder system according to one of claims 1-3, **characterized in that** the at least one sugar alcohol is selected from a group comprising tetravalent, pentavalent, hexavalent alcohols, wherein threit, erythritol, pentaerythritol are used as tetravalent alcohols, arabitol, adonitol, xylitol are used as pentavalent alcohols and sorbitol, mannitol, dulcitol, dipentaerythritol are used as hexavalent alcohols.

6. Binder system according to one of the preceding claims, **characterized in that** the at least one isocyanate is polydiphenylmethane diisocyanate (PMDI), toluylene diisocyanate (TDI) and/or diphenylmethane diisocyanate (MDI).

7. Binder system according to one of the preceding claims, **characterized in that** the second component of at least one isocyanate is present in an amount between 5 and 30% by weight, preferably between 10 and 25% by weight, more preferably between 15 and 20% by weight with respect to the total amount of first and second component.

8. A method of manufacturing a wood-based panel using a binder system according to one of the preceding claims comprising the steps of:
a) Providing of wood particles,
b) Gluing the wood particles by applying an aqueous binder system with a first component consisting of at least one sugar, at least one sugar alcohol, or a mixture thereof, and a second component consisting of at least one isocyanate to the wood particles;
(c) placing the glued wood particles on a conveyor belt; and
d) Pressing of the glued wood particles arranged on the conveyor belt.

9. Method according to claim 8, **characterized in that** the at least one sugar and/or the at least one sugar alcohol is applied to the wood particles as an aqueous solution having a solids content of between 60 and 80% by weight, preferably between 65 and 75% by weight, more preferably 70% by weight.

10. Method according to one of claims 8-9, **characterized in that** the at least one isocycanate is applied in an amount between 5 and 30 g, preferably between 10 and 25 g, more preferably between 15 and 20 g in the form of a 100% by weight solution based on 1 kg of wood particles.

11. Method according to one of claims 8-10, **characterized in that** the pressing is performed at a pressing temperature between 150 and 200°C, preferably 180°C, and a pressing time between 30 and 240 sec, preferably 100 and 210 sec, in particular 150 and 180 sec.

12. Method according to one of claims 8-11, **characterised in that** the wood particles are used in the form of, wood chips or wood strands.

13. Wood-based panel producible by a process according to one of claims 8-12 **characterised by** a binder composition consisting of
- a first component of at least one sugar, at least one sugar alcohol, or a mixture; and
- a second component of at least one isocyanate.

14. Wood-based panel according to claim 13, **characterised in that** the wood-based panel is a chipboard or an OSB (oriented strand board).

15. Wood-based panel according to one of claims 13-14 **characterized by** a transverse tensile strength of greater than 0.25 N/mm² , in particular of greater than 0.3 N/mm² , preferably of greater than 0.4 N/mm² , more preferably of greater than 0.5 N/mm² .

## Revendications

1. Système de liant pour panneaux en matériau dérivé du bois constitué de
- un premier composant constitué d'au moins un sucre, d'au moins un alcool de sucre, ou d'un mélange de ceux-ci ;
- un deuxième composant constitué d'au moins un isocyanate, et
- de l'eau.

2. Système de liant selon la revendication 1, **caractérisé en ce qu'**il est exempt de formaldéhyde, de polyols synthétiques et/ou de matières plastiques et d'épaississants, en particulier d'alcool polyvinylique ou d'acétate de polyvinyle.

3. Système de liant selon l'une quelconque des revendications précédentes, **caractérisé en ce que** le premier composant composé d'au moins un sucre, d'au moins un alcool de sucre, ou d'un mélange de ceux-ci est présent dans une quantité comprise entre 70 et 95 % en poids, de préférence entre 75 et 90 % en poids, en particulier entre 80 et 85 % en poids par rapport à la quantité totale de premier et deuxième composant.

4. Système de liant selon l'une quelconque des revendications précédentes, **caractérisé en ce que** le au moins un sucre est un monosaccharide du groupe des pentoses et hexoses, en particulier choisi dans le groupe contenant l'arabinose, le ribose, le xylose, le glucose (dextrose), le mannose, le galactose et le fructose.

5. Système de liant selon l'une quelconque des revendications 1-3, **caractérisé en ce que** le au moins un alcool de sucre est choisi dans un groupe contenant des alcools tétravalents, pentavalents, hexavalents, dans lequel le thréitol, l'érythrite, le pentaérythritol sont utilisés comme alcools tétravalents, l'arabitol, l'adonitol, le xylitol comme alcools pentavalents et le sorbitol, le mannitol, le dulcitol, le dipentaérythritol comme alcools hexavalents.

6. Système de liant selon l'une quelconque des revendications précédentes, **caractérisé en ce que** le au moins un isocyanate est le diisocyanate de polydiphénylméthane (PMDI), le diisocyanate de toluène (TDI) et/ou le diisocyanate de diphénylméthane (MDI).

7. Système de liant selon l'une quelconque des revendications précédentes, **caractérisé en ce que** le deuxième composant composé d'au moins un isocyanate est présent dans une quantité comprise entre 5 et 30 % en poids, de préférence entre 10 et 25 % en poids, de manière particulièrement préférée entre 15 et 20 % en poids par rapport à la quantité totale de premier et deuxième composant.

8. Procédé pour la fabrication d'un panneau en matériau dérivé du bois au moyen d'un système de liant selon l'une quelconque des revendications précédentes comprenant les étapes de :
a) fourniture de particules de bois,
b) encollage des particules de bois par application d'un système de liant aqueux avec un premier composant constitué d'au moins un sucre, d'au moins un alcool de sucre, ou d'un mélange de ceux-ci, et un deuxième composant constitué d'au moins un isocyanate sur les particules de bois ;
c) application des particules de bois encollées sur une bande de transport ; et
d) compression des particules de bois encollées disposées sur la bande de transport.

9. Procédé selon la revendication 8, **caractérisé en ce que** le au moins un sucre et/ou le au moins un alcool de sucre en tant que solution aqueuse avec un pourcentage de matières solides compris entre 60 et 80 % en poids, de préférence entre 65 et 75 % en poids, de manière particulièrement préférée de 70 % en poids est appliqué sur les particules de bois.

10. Procédé selon l'une quelconque des revendications 8-9, **caractérisé en ce que** le au moins un isocyanate est appliqué dans une quantité comprise entre 5 et 30 g, de préférence entre 10 et 25 g, de manière particulièrement préférée entre 15 et 20 g sous forme d'une solution à 100 % en poids par rapport à 1 kg de particules de bois.

11. Procédé selon l'une quelconque des revendications 8-10, **caractérisé en ce que** la compression s'effectue à une température de compression comprise entre 150 et 200 °C, de préférence de 180 °C et à un temps de compression compris entre 30 et 240 sec, de préférence 100 et 210 sec, en particulier 150 et 180 sec.

12. Procédé selon l'une quelconque des revendications 8-11, **caractérisé en ce que** les particules de bois sont utilisées sous forme de rabotures ou de copeaux de bois.

13. Panneau en matériau dérivé du bois pouvant être fabriqué selon un procédé selon l'une quelconque des revendications 8- 12 **caractérisé par** une composition de liant constituée de
- un premier composant composé d'au moins un sucre, d'au moins un alcool de sucre, ou d'un mélange ; et
- un deuxième composant composé d'au moins un isocyanate.

14. Panneau en matériau dérivé du bois selon la revendication 13, **caractérisé en ce que** le panneau en matériau dérivé du bois est un panneau de particules de bois ou un panneau OSB (panneau de particules de bois).

15. Panneau en matériau dérivé du bois selon l'une quelconque des revendications 13-14 **caractérisé par** une résistance à la traction transversale supérieure à 0,25 N/mm², en particulier supérieure à 0,3 N/mm², de préférence supérieure à 0,4 N/mm², de préférence encore supérieure à 0,5 N/mm².
